# EUROPÄISCHE PATENTSCHRIFT

(11) **EP 1 144 220 B1**
(45) Veröffentlichungstag und Bekanntmachung des Hinweises auf die Patenterteilung: **14.08.2002**
(21) Anmeldenummer: 99968378.2
(22) Anmeldetag: 23.12.1999
(51) Int. Cl.: B60R 1/00

(54) **FAHRZEUGRÜCKBLICKSYSTEM MIT ELEKTROCHROMEM SPIEGEL**
VEHICLE REARVIEW SYSTEM WITH ELECTROCHROMIC MIRROR
SYSTEME DE RETROVISEUR DE VEHICULE POURVU D'UN MIROIR ELECTROCHROME

(30) Priorität: 29.12.1998 DE 19860941
(43) Veröffentlichungstag der Anmeldung: 17.10.2001
(73) Patentinhaber: Magna Reflex Holding GmbH, 97959 Assamstadt (DE)
(72) Erfinder: HEINZ, Jürgen, A., D-91541 Rothenburg (DE)
(74) Vertreter: Pfenning, Meinig & Partner GbR
(86) Internationale Anmeldenummer: EP9910354
(87) Internationale Veröffentlichungsnummer: WO0038950

(56) Entgegenhaltungen:
- EP-A- 0 711 683
- EP-A- 0 820 901
- EP-A- 0 869 032
- WO-A-95/31084
- DE-A- 19 736 482
- US-A- 4 584 461
- US-A- 5 808 777
- PATENT ABSTRACTS OF JAPAN vol. 010, no. 223 (P-483), 5. August 1986 (1986-08-05) & JP 61 059317 A (NIPPON KOGAKU KK), 26. März 1986 (1986-03-26)

## Beschreibung

Die vorliegende Erfindung betrifft ein Fahrzeugrückblicksystem nach dem Oberbegriff des Hauptanspruches.

Aus der US 5 808 777 A sind derartige Fahrzeugrückblicksysteme mit mindestens einer mit einem elektrochromen Spiegel versehener Rückspiegeleinheit, einer Steuereinrichtung sowie einer Bordspannungsversorgungseinrichtung bekannt, wobei die Steuereinrichtung zu ihrer Spannungsversorgung mit der Bordspannungsversorgungseinrichtung, mit dem elektrochromen Spiegel zur Steuerung dessen Reflexionseigenschaften in Abhängigkeit einer Steuerspannung und mit einem flächenhaften Heizwiderstand elektrisch verbunden ist. Die Ansteuerung des elektrochromen Spiegels in Bezug auf seine Transmissions- bzw. Reflexionseigenschaften erfolgt durch eine Gleichspannung, welche in der Höhe nach Maßgabe von Lichtsensoren regelbar ist. Die Ansteuerspannung variiert hierbei in einem Bereich von 0V bis z.B. etwa 1,2V. Die Gleichspannung wird von der Steuereinrichtung, deren wesentliche Komponenten sich in der Regel in dem Gehäuse des im Fahrzeuginnenraum befindlichen Rückblickspiegels (Innenspiegels) befinden, in Abhängigkeit vom Blendzustand generiert. In der Regel sind sowohl der Innenspiegel als auch an der Fahrzeugaußenseite befindliche Rückblickspiegel (Außenspiegel) mit elektrochromen Spiegeln versehen, üblicherweise wird die niedrige Steuerspannung zur einheitlichen Ansteuerung des Innenspiegels und der Außenspiegel verwendet.

Probleme ergeben sich jedoch daraus, daß die Bordspannung üblicher Personenkraftfahrzeuge in der Regel zwischen 9V und 16V beträgt (nominal 12V), während der Höchstwert der variablen Steuerspannung z.B. nur 1,2V beträgt. Dies führt dazu, daß bei einem typischen Strom durch einen elektrochromen Spiegel von ca. 300 mA eine Verlustleistung von ca. 4 W in Wärme umzusetzen ist. Bei Vorrichtungen nach dem Stand der Technik erfolgt diese Umsetzung üblicherweise mittels eines Leistungstransistors, welcher in dem sehr kleinvolumigen Gehäuse des Innenspiegels untergebracht ist. Zur Kühlung der auftretenden sehr hohen Temperaturen werden üblicherweise an dem Leistungstransistor anzubringende Aluminiumkühlbleche verwendet.

Besonders problematisch erweist sich diese unabdingbare Verlustleistung bei der Miniaturisierung der Elektronik. Es ist nach heutigem Stand der Technik durchaus möglich, die gesamte Elektronik zur Ansteuerung eines elektrochromen Spiegels in einem integrierten Leistungshalbleiterbaustein (PowerIC) zu integrieren. Ein solcher PowerIC müßte jedoch die besagten 4 W Verlustleistung so an die Umgebung abführen können, daß seine innere Chiptemperatur unter einem kritischen Wert von üblicherweise 125°C bleibt. Dies wiederum erfordert neben einem geeigneten kostenaufwendigen Leistungsgehäuse des PowerICs ein hinreichend großes Volumen an Umgebungsluft, welche eine zum Kühlen hinreichend niedrige Temperatur aufweist. Ein solch großer Raum ist jedoch üblicherweise nicht in dem Innenspiegelgehäuse vorhanden (außerdem wirkt dieser große Raumbedarf der beabsichtigten Miniaturisierung entgegen). Bei Außenspiegeln verschärft sich dieses Problem weiter, neben einem in der Regel noch kleineren zur Verfügung stehendem Raum ist hier auch die erhöhte Grundtemperatur des Spiegelgehäuses (etwa aufgrund von intensiver Sonneneinstrahlung im Sommer) zu beachten.

Der vorliegenden Erfindung liegt daher die Aufgabe zugrunde, ein Fahrzeugrückblicksystem zu schaffen, welches die Unterbringung der Steuereinrichtung auf kleinstem Raum ermöglicht, ohne daß die auftretende Verlustleistung zu einer Funktionsbeeinträchtigung der Steuerelektronik führt.

Diese Aufgabe wird durch ein Fahrzeugrückblicksystem mit den Merkmalen des Oberbegriffs des Hauptanspruches in Verbindung mit den kennzeichnenden Merkmalen des Hauptanspruches gelöst.

Dadurch, daß die Steuereinrichtung einen flächenhaften Heizwiderstand zur Abführung von durch elektrische Verlustleistung entstehende Wärme aufweist, kann zum einen durch eine "Auslagerung" der entstehenden Wärme eine Funktionsbeeinträchtigung der Steuerelektronik verhindert werden. Zum anderen ist es möglich, die in dem flächenhaften Heizwiderstand entstehende Wärme an einem solchen Ort abzuleiten, wo er z.B. die nutzbringende Funktion einer Heizung (etwa für eine Spiegelfläche) erfüllt.

Vorteilhafte Ausführungsformen der vorliegenden Erfindung werden in den abhängigen Ansprüchen angegeben.

Eine vorteilhafte Ausführungsform sieht vor, daß der Heizwiderstand als Beschichtung auf ein Trägermaterial, wie etwa die nichtreflektierende Rückseite des Spiegels der Rückspiegeleinheit, eine Kunststofffolie oder eine flächenhaft ausgeführte elektrische Leitung ("Flex"- bzw. Leiterbahnverbindung) aufgebracht ist. Die Beschichtung kann auf vielfältige flächenhafte Trägermaterialien angebracht werden, die dabei entstehende Wärme beeinträchtigt hierbei nicht die Funktion der Steuerelektronik und kann zudem nutzbringend (etwa gegen Beschlagen von Glas bzw. Vereisen von Gegenständen) eingesetzt werden.

Eine besonders vorteilhafte Ausführungsform sieht vor, daß der Heizwiderstand mäanderförmig auf dem Trägermaterial, vorzugsweise einer Kunststofffolie angeordnet ist. Auf derselben Kunststofffolie kann außerdem eine in gleicher Weise hergestellte mäanderförmige Spiegelglasheizung angeordnet werden, wobei die Mäanderstrukturen beider Widerstände kompakt nebeneinander oder ineinandergreifend angeordnet werden können. Um stets einen beschlagfreien Spiegel sicherzustellen, kann diese Folie beidseitig mit Doppelklebeband belegt und einerseits an die Rückseite des Spiegels und andererseits auf eine Glasträgerplatte geklebt werden. Neben einer sehr guten Wärmeleitung zu dem zu heizenden Spiegel hin wird hiermit außerdem ein kostengünstiges Fügen des Spiegelglases auf der Glasträgerplatte ermöglicht.

Eine weitere vorteilhafte Ausführungsform der vorliegenden Erfindung sieht vor, daß die Steuereinrichtung eine Einheit zur Pulsweitenmodulation eines Steuersignales mit einem Signalpegel, vorzugsweise in Höhe der Bordspannung, aufweist, und die Einheit zur Pulsweitenmodulation mit einem zur Steuereinrichtung gehörenden Wandler zur Umwandlung des pulsweitenmodulierten Signals in eine analoge Steuerspannung verbunden ist. Es ist besonders vorteilhaft bei einem Signalpegel in Höhe der Bordspannung z.B. von einer in dem Innenspiegelgehäuse befindlichen Signalerzeugungseinheit erzeugtes Signal zu den Außenspiegeln zu transportieren. In diesem Falle befindet sich der erfindungsgemäße Wandler im Bereich des Außenspiegels, die in ihm bei der Umwandlung des pulsmodulierten Signals in Höhe der Bordspannung in eine analoge Steuerspannung geringer Höhe auftretende Verlustleistung wird wiederum in einem erfindungsgemäßen Heizwiderstand umgesetzt. Hierbei kann auch auf die bei Rückblicksystemen nach dem Stand der Technik übliche separate Masseleitung zwischen Innenspiegel und Außenspiegel verzichtet werden, welche notwendig ist, um die Potentialunterschiede zwischen Innen- und Außenspiegel des Fahrzeugs auszugleichen. Dies rührt daher, daß bei der Zuführung einer Spannung von dem Innenspiegel zu den Außenspiegeln in Höhe der Bordspannung die Potentialunterschiede deutlich weniger ins Gewicht fallen als bei Direktübertragung der niedrigen Steuerspannung (z.B. maximal 1,2V).

Weitere vorteilhafte Ausführungsformen der vorliegenden Erfindung werden in den übrigen abhängigen Ansprüchen angegeben.

Die vorliegende Erfindung wird nun anhand mehrerer Figuren erläutert. Es zeigen:
- Fig. 1: einen erfindungsgemäßen Heizwiderstand auf der Rückseite eines elektrochromen Spiegels,
- Fig. 2: einen Querschnitt durch einen erfindungsgemäßen Außenspiegel,
- Fig. 3: ein Blockschaltbild eines erfindungsgemäßen Fahrzeugrückblicksystems,
- Fign. 4a und 4b: zwei Möglichkeiten zur schaltungstechnischen Anordnung eines erfindungsgemäßen Heizwiderstandes.

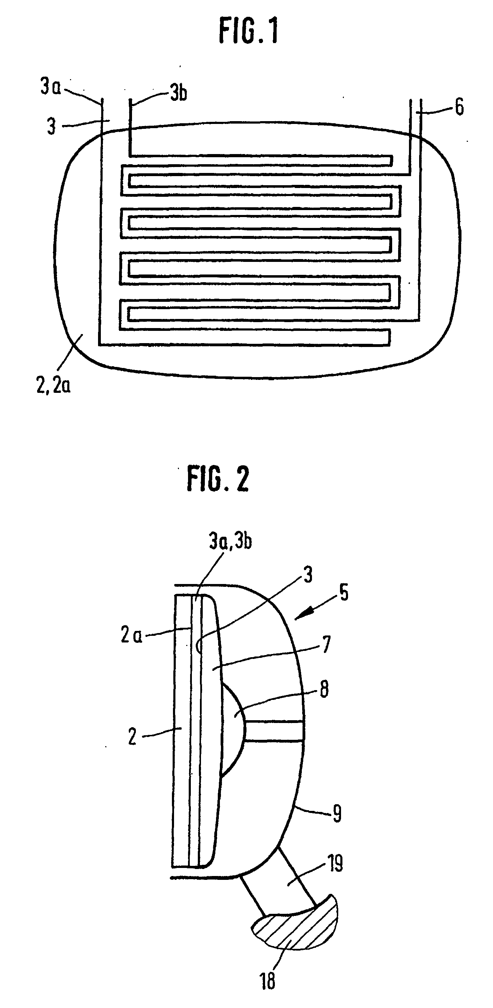

Fig. 1 zeigt einen erfindungsgemäßen Verlustwiderstand der im folgenden als Heizwiderstand 3 bezeichnet wird und der mäanderförmig ausgeführt ist und auf der nichtreflektierenden Rückseite 2a eines elektrochromen Spiegels 2 einer Rückspiegeleinheit angeordnet ist. Das Aufbringen des Heizwiderstandes auf die Spiegelrückseite 2a kann mittels Metallbeschichtung im Plasmaverfahren, Siebdruck unter Einsatz von Widerstandspaste (die Widerstandspaste wird in der Form des gewünschten Heizelementes aufgetragen) oder galvanische Beschichtung erfolgen. Der Heizwiderstand 3 (d.h. die Beschichtung) kann aus Kupfer, Silber oder Aluminium sein. In jedem Falle ist der Heizwiderstand linienförmig bzw. flächenmäßig ausgeführt, es fällt eine Heizwiderstandsspannung zwischen den elektrischen Anschlüssen 3a und 3b, welche Anfang und Ende des Heizwiderstandes darstellen, ab.

Ebenfalls auf der Rückseite 2a des elektrochromen Spiegels 2 ist eine Spiegelglasheizung 6 angebracht, welche zusätzlich den Spiegel 2 beheizt. Diese kann auch mäanderförmig angeordnet sein, es erweist sich als besonders vorteilhaft, wie in Fig. 1 gezeigt, den Verlauf der Spiegelglasheizung 6 komplementär zu dem Verlauf des Heizwiderstands 3 zu gestalten.

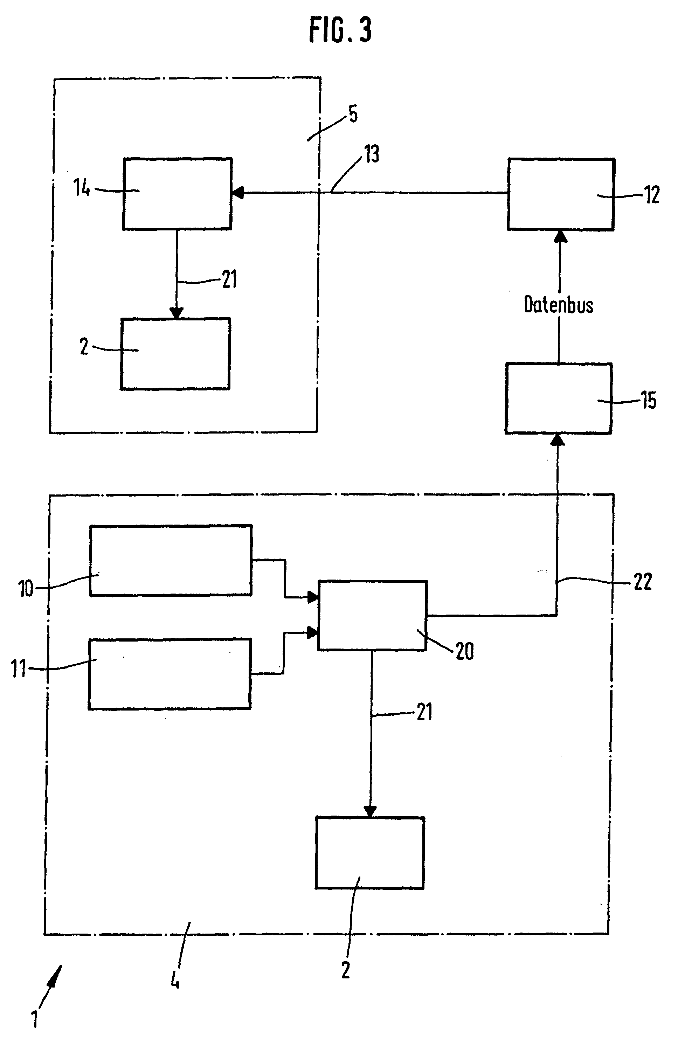

Es ist nicht zwingend notwendig, den Heizwiderstand 3 direkt an dem elektrochromen Spiegel 2 anzuordnen. Hierbei ergibt sich zwar eine vorteilhafte Heizwirkung, welche ein Vereisen bzw. Beschlagen der Spiegelfläche verhindern hilft, es sind jedoch auch andere Anordnungen möglich. So kann z.B. vorgesehen werden, daß der Heizwiderstand 3 auf Folienleiterplatten angebracht wird ("Flex"- bzw. "FPC-"Zuleitungen). Solche Zuleitungen können z.B. die elektrische Verbindung von der Steuereinrichtung zu dem elektrochromen Spiegel herstellen oder auch einzelne Elemente der Steuereinrichtung miteinander verbinden (s. hierzu auch Fig. 3).

Fig. 2 zeigt den Querschnitt eines erfindungsgemäßen Außenspiegels bzw. einer Außenspiegeleinheit 5. Dieser weist einen elektrochromen Spiegel 2 auf, der auf nicht näher dargestellte Weise mit einer Steuereinrichtung elektrisch verbunden ist. Diese Steuereinrichtung bzw. Teile der Steuereinrichtung (s. Fig. 3) können innerhalb des Gehäuses 9 der Außenspiegeleinheit 5 untergebracht werden (in Fig. 2 ist lediglich der zu der Steuereinrichtung gehörende Heizwiderstand 3, welcher innerhalb des Gehäuses 9 liegt, dargestellt).

Das Gehäuse 9 ist über einen Steg 19 mit dem äußeren Chassis 18 eines Kraftfahrzeugs verbunden. Ein innerhalb des Gehäuses 9 befindlicher Glasverstellantrieb 8 trägt eine Glasträgerplatte 7. Auf der dem Glasverstellantrieb 8 abgewandten Seite der Glasträgerplatte 7 ist ein erfindungsgemäßer Heizwiderstand 3 angebracht. Dieser ist über elektrische Kontakte 3a, 3b, welche z.B. als "Flexleitungen" ausgeführt sein können, mit weiteren, nicht dargestellten Elementen einer Steuereinrichtung verbunden. Auf der der Glasträgerplatte abgewandten Seite des Heizwiderstandes 3 ist der elektrochrome Spiegel 2 angebracht. Die Anbringung des Heizwiderstandes 3 zwischen Glasträgerplatte 7 und elektrochromem Spiegel 2 kann auf verschiedene Weisen erfolgen. Der Heizwiderstand 3 kann z.B. als feste Beschichtung auf die Rückseite 2a des elektrochromen Spiegels aufgebracht sein.

Eine weitere Möglichkeit sieht vor, daß der Heizwiderstand 3 als Folienverbund ausgeführt ist. Hierzu wird das zwischen den Kontakten 3a und 3b verlaufende Widerstandselement zwischen zwei Folien eingeschlossen. Es ist nun möglich, diesen Folienverbund formschlüssig, etwa mittels einer schnappbaren Steckverbindung, auf die Rückseite 2a des elektrochromen Spiegels aufzubringen. Eine andere Variante sieht vor, daß die Außenseiten des Folienverbunds selbstklebend sind. In diesem Falle stellt der Heizwiderstand 3 die feste Verbindung des Spiegels 2 auf der Glasträgerplatte 7 sicher (statt der selbstklebenden Außenfläche der Folie kann selbstverständlich auch ein Doppelklebeband auf die Außenseiten des Folienverbundes geklebt werden, welcher dieselbe Funktion hat).

Es ist auch möglich, zwischen Glasträgerplatte 7 und Spiegel 2 weitere Elemente der Steuereinrichtung, z.B. einen integrierten Schaltkreis, unterzubringen.

Dieser integrierte Schaltkreis kann entweder direkt auf die Rückseite 2a des Spiegels 2 oder auf eine Folie aufgebracht werden. Das Aufbringen kann hierbei in SMD- oder Chip-On-Board-Technologie geschehen. Ein integrierter Schaltkreis könnte auch innerhalb des oben beschriebenen Folienverbundes untergebracht werden. Als Folien kommen hierbei vorzugsweise hitzebeständige Kunststoffe zum Einsatz.

Weitere Elemente der Steuereinrichtung, etwa ein Digital-Analog-Wandler, können ebenfalls innerhalb des Gehäuses 9 der Außenspiegeleinheit 5 untergebracht werden, z.B. innerhalb des Glasverstellantriebes 8.

Die obigen Ausführungen bezogen sich beispielhaft auf die in Fign. 1 und 2 gezeigten Außenspiegel. Die beschriebenen Ausführungen sind gleichermaßen für Innenspiegel anwendbar.

Fig. 3 zeigt einen schematischen Aufbau des gesamten Fahrzeugrückblicksystems. Dieses enthält zwei Rückblickeinheiten, eine Innenspiegeleinheit 4 sowie eine Außenspiegeleinheit 5. Eine nicht näher dargestellte Bordspannungsversorgungseinrichtung stellt eine Gleichspannung von nominal 12V zur Verfügung. Die Bordspannung kann jedoch zwischen 5V und 24V sein, je nach Kraftfahrzeug. Die Bordspannungsversorgungsvorrichtung ist zur Spannungsversorgung der Steuereinrichtung mit dieser verbunden. Die Außenspiegeleinheit 5 weist ein oder zwei elektrochrome Spiegel (jeweils auf einer Fahrzeugseite) auf, die Innenspiegeleinheit einen elektrochromen Fahrzeugspiegel.

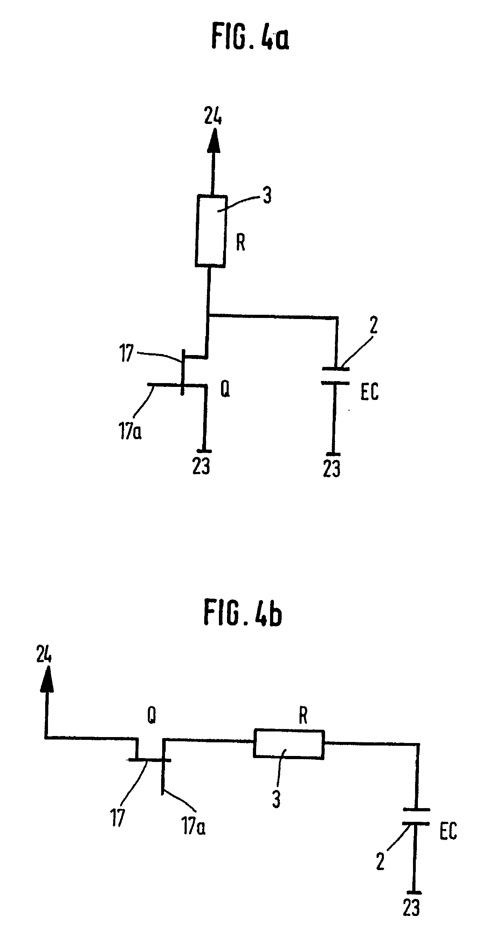

Ein am Innenspiegel befestigter Blendlichtsensor 10, welcher in Reflexionsrichtung des elektrochromen Spiegels (d.h. zur Fahrzeugrückseite hin) orientiert ist, mißt den von der Fahrzeugrückseite her einfallenden Lichtstrom (etwa von dahinterfahrenden Fahrzeugen). Ein Tageslichtsensor 11, welcher z.B. in Fahrtrichtung oder zur Fahrzeugseite hin orientiert ist, bestimmt einen weiteren Lichtstrom. Die Sensoren 10 und 11 sind zur Datenweiterleitung mit einer Rechnereinheit 20 der Steuereinrichtung verbunden. Abhängig von den Meßwerten der Sensoren wird von der Rechnereinheit 20 ein Blendzustand ermittelt, welcher in ein analoges Steuersignal umgesetzt wird. Dieses analoge Steuersignal wird sodann einem Transistor zugeführt (s. Eingang 17a des Transistors Q in Fign. 4a und 4b). Die in Fign. 4a und 4b gezeigte Schaltung, auf welche später näher eingegangen wird, stellt dem elektrochromen Spiegel 2 eine nach Maßgabe des Blendzustandes zwischen 0V und 1,5V schwankende Gleichspannung zur Verfügung. In Abhängigkeit dieser Spannung ändern sich die Reflexionseigenschaften des elektrochromen Spiegels 2 in bekannter Weise. Die analoge Spannung 21 beträgt z.B. zwischen 0V und 1,5V. Sie kann jedoch auch, je nach Ausführung, höhere Spannungsbereiche abdecken, z.B. von 0V bis 2,5V.

Neben der Steuerung der Reflexionseigenschaften des Innenspiegels steuert die Rechnereinheit 20 auch die Reflexionseigenschaften mindestens eines elektrochromen Spiegels 2 der Außenspiegeleinheit 5. Hierzu überträgt die Rechnereinheit 20 ein analoges Signal, wie es etwa dem elektrochromen Spiegel 2 der Innenspiegeleinheit 4 zugeführt wurde, an den elektrochromen Spiegel 2 der Außenspiegeleinheit 5. Dieses Signal kann z.B. direkt übertragen werden. Fig. 3 zeigt noch eine weitere Möglichkeit der Übertragung.

Diese Möglichkeit besteht darin, das analoge Steuersignal zunächst in einem Analog-Digital-Wandler 15, welcher z.B. in einem "Dachmodul" eines Kraftfahrzeugs untergebracht ist, zu digitalisieren (je nach Ausführung der Rechnereinheit 20 kann in einigen Ausführungsformen auch ein in der Rechnereinheit 20 integrierter Mikrokontroller bereits ein digitales Signal aussenden). Das im Analog-Digital-Wandler 15 digitalisierte Signal wird mittels Datenbus zu einem Türsteuergerät 12 geleitet. Das Türsteuergerät 12 ist als Knoten ausgeführt, welcher sämtliche Funktionen der Tür, wie etwa Glasverstellantriebe, Spiegelglasheizung, Beiklappantrieb, Beleuchtungseinrichtungen sowie Signaleinrichtung steuert.

Die Verbindung zwischen Türsteuergerät 12 und Einheit 14 zeigt eine weitere Variante der Übertragung des Steuersignals zu einem elektrochromen Spiegel 2.

Das zu der Steuereinrichtung gehörende Türsteuergerät 12 enthält eine Einheit zur Pulsweitenmodulation eines Steuersignals mit einem Signalpegel in Höhe der Bordspannung (selbstverständlich sind neben den üblichen 12V Bordspannung auch andere Spannungshöhen möglich). Das pulsweitenmodulierte Helligkeitssignal mit einem Signalpegel in Höhe der Bordspannung wird der Einheit 14 zugeführt. Die Einheit 14 weist einen zu der Steuereinrichtung gehörenden Wandler zur Umwandlung des pulsweitenmodulierten Signals 13 in eine analoge Steuerspannung auf. Um die in der Beschreibungseinleitung geschilderten Wärmeprobleme zu vermeiden, wird bei dieser Umsetzung eine Schaltungsanordnung gemäß Fign. 4a oder 4b benötigt. Die analoge Steuerspannung geringer Höhe (vorzugsweise zwischen 0V und 1,5V) wird dann dem elektrochromen Spiegel 2 zugeführt.

Im vorliegenden Beispiel ist die Rechnereinheit 20 in der Innenspiegeleinheit untergebracht. Es ist selbstverständlich möglich, die Rechnereinheit 20 auch in der Außenspiegeleinheit 5 unterzubringen. Aufgrund der erfindungsgemäßen Ausbildung eines Heizwiderstandes treten hierbei keine Wärmeprobleme im Außenspiegel auf, die Abwärme kann sogar als Nutzwärme zur Heizung der Spiegelfläche verwendet werden. Die Rechnereinheit kann auch an anderen Orten, etwa im Bereich des Türsteuergerätes 12 oder des Dachmoduls untergebracht werden.

Das in Fig. 3 gezeigte Ausführungsbeispiel zeigt also mehrere Übertragungswege zwischen Rechnereinheit 20 und einem elektrochromen Spiegel 2 auf:
1. analoge Übertragung,
2. Digitalisierung und Übertragung mittels Datenbus,
3. Pulsweitenmodulierung mit einem Signalpegel z.B. in Höhe von der Fahrzeugbordspannung.

Selbstverständlich ist es möglich, zur Signalübertragung lediglich eines der vorgestellten Systeme zu verwenden. Hierzu sind im Falle der digitalen Übertragung mittels Datenbus (vorzugsweise wird ein UART- oder CAN-Protokoll verwendet) z.B. Digital-Analog-Wandler zur Umwandlung des Datenbussignals in eine analoge Steuerspannung notwendig.

Fig. 4a zeigt eine Schaltung zur Minimierung der Wärmeentwicklung im Bereich des Transistors Q. Der flächenartig ausgeführte Heizwiderstand 3 ist in Reihe zu einer Parallelschaltung von einem Steuertransistor Q und einem elektrochromen Spiegel 2 geschaltet. Zwischen den Punkten 23 und 24 fällt eine Spannung in Höhe der Fahrzeugbordspannung ab. Durch den Eingang 17a wird eine Steuerspannung bzw. ein Steuersignal dem Transistor Q zugeführt, wodurch der Durchgangsstrom durch Transistor und Widerstand geregelt wird. Abhängig von diesem Durchgangsstrom fällt eine unterschiedlich hohe Teilspannung am Heizwiderstand R ab, so daß an dem elektrochromen Spiegel 2 eine unterschiedlich hohe Restspannung verbleibt, welche z.B. im Bereich zwischen 0V und 1,5V liegt. Die Verwendung einer Schaltung nach Fig. 4a ist besonders vorteilhaft, da hierin die im Transistor anfallende Verlustleitung besonders gering ist (statt der in Leistungstransistoren nach dem Stand der Technik eingangs erwähnten 4W sind hier z.B. lediglich 0,5W im Transistor umzusetzen.

Fig. 4b zeigte eine weitere Ausführungsform einer erfindungsgemäßen Schaltungsanordnung. Zwischen den Punkten 23 und 24 liegt eine Spannung von z.B. 12V (Höhe der Fahrzeugbordspannung) an. In dieser Ausführungsform sind der Transistor Q, welcher von einem Steuersignal 17a angesteuert wird, der Heizwiderstand 3 sowie der elektrochrome Spiegel 2 in Reihe geschaltet. Wie bei der in Fig. 4a gezeigten Anordnung ist der Heizwiderstand 3 flächig angeordnet (z.B. spiral- oder mäanderförmig).

Die in Fign. 4a und 4b gezeigten Schaltungen sollten so ausgelegt sein, daß die maximal am elektrochromen Spiegel anliegende Steuerspannung weniger als 25% der nominalen Fahrzeugbordspannung beträgt.

## Patentansprüche

1. Fahrzeugrückblicksystem (1) mit mindestens einer mit einem elektrochromen Spiegel (2) versehenen Rückspiegeleinheit (5), einer Steuereinrichtung sowie einer Bordspannungsversorgungseinrichtung, wobei die Steuereinrichtung (12, 20) zu ihrer Spannungsversorgung mit der Bordspannungsversorgungseinrichtung (23, 24), mit dem elektrochromen Spiegel zur Steuerung seiner Reflexionseigenschaften in Abhängigkeit einer Steuerspannung und mit einem flächenhaften Heizwiderstand (3) elektrisch verbunden ist,
**dadurch gekennzeichnet,**
**daß** die Steuereinrichtung den flächenhaften Heizwiderstand (3) als Verlustwiderstand zur Abführung der bei der Erzeugung der Steuerspannung entstehenden elektrischen Verlustleistung als Wärme aufweist.

2. Fahrzeugrückblicksystem nach Anspruch 1, **dadurch gekennzeichnet, daß** die Steuerspannung weniger als 25% der Bordspannung beträgt.

3. Fahrzeugrückblicksystem nach einem der vorhergehenden Ansprüche, **dadurch gekennzeichnet, daß** die Rückspiegeleinheit als Innen- (4) oder Außenspiegeleinheit (5) ausgeführt ist.

4. Fahrzeugrückblicksystem nach Anspruch 3, **dadurch gekennzeichnet, daß** Innen- (4) und/oder Außenspiegeleinheit (5) jeweils elektrochrome Spiegel (2) aufweisen, welche jeweils mit der Steuereinrichtung verbunden sind.

5. Fahrzeugrückblicksystem nach Anspruch 3, **dadurch gekennzeichnet, daß** Teile der Steuereinrichtung im Gehäuse (9) der Innen- (4) oder Außenspiegeleinheit (5) untergebracht sind.

6. Fahrzeugrückblicksystem nach einem der vorhergehenden Ansprüche, **dadurch gekennzeichnet, daß** der Heizwiderstand (3) als Beschichtung auf ein Trägermaterial aufgebracht ist.

7. Fahrzeugrückblicksystem nach Anspruch 6, **dadurch gekennzeichnet, daß** das Trägermaterial die nichtreflektierende Rückseite (2a) des Spiegels (2) der Rückspiegeleinheit, eine flächenhaft ausgeführte elektrische Leitung oder eine Folie ist.

8. Fahrzeugrückblicksystem nach Anspruch 6, **dadurch gekennzeichnet, daß** die Beschichtung aus Kupfer, Silber oder Aluminium ist.

9. Fahrzeugrückblicksystem nach Anspruch 7, **dadurch gekennzeichnet, daß** der Heizwiderstand (3) mäanderförmig auf dem Trägermaterial (2) angeordnet ist.

10. Fahrzeugrückblicksystem nach Anspruch 9, **dadurch gekennzeichnet, daß** auf demselben Trägermaterial, auf welchem der Heizwiderstand (3) mäanderförmig angeordnet ist, eine zu der Rückspiegeleinheit gehörende Spiegelglasheizung (6) angeordnet ist.

11. Fahrzeugrückblicksystem nach einem der vorhergehenden Ansprüche, **dadurch gekennzeichnet, daß** der Heizwiderstand (3) stoff- oder formschlüssig mit dem elektrochromen Spiegel (2) verbunden ist.

12. Fahrzeugrückblicksystem nach einem der vorhergehenden Ansprüche, **dadurch gekennzeichnet, daß** der Spiegel auf einer zu der Rückspiegeleinheit gehörenden Glasträgerplatte (7), welche zu der nichtreflektierenden Rückseite des Spiegels hin orientiert ist, angeordnet ist und der Heizwiderstand (3) sowie weitere Elemente der Steuereinrichtung zwischen Spiegel und Glasträgerplatte angeordnet sind.

13. Fahrzeugrückblicksystem nach einem der vorhergehenden Ansprüche, **dadurch gekennzeichnet, daß** Elemente der Steuereinrichtung in einem zu der Rückspiegeleinheit gehörenden Glasverstellantrieb (8) angeordnet sind.

14. Fahrzeugrückblicksystem nach einem der vorhergehenden Ansprüche, **dadurch gekennzeichnet, daß** die Steuereinrichtung einen integrierten Schaltkreis enthält.

15. Fahrzeugrückblicksystem nach Anspruch 14, **dadurch gekennzeichnet, daß** der integrierte Schaltkreis direkt auf eine Folie aufgebracht ist.

16. Fahrzeugrückblicksystem nach einem der vorhergehenden Ansprüche, **dadurch gekennzeichnet, daß** die Steuereinrichtung mindestens einen, vorzugsweise im Lichteinfallbereich eines elektrochromen Spiegels angeordneten Lichtsensor (10, 11) aufweist, welcher in Abhängigkeit des einfallenden Lichtstroms ein Steuersignal zur Erzeugung einer Steuerspannung erzeugt.

17. Fahrzeugrückblicksystem nach einem der vorhergehenden Ansprüche, **dadurch gekennzeichnet, daß** die Steuereinrichtung eine Einheit zur Pulsweitenmodulation (12) eines Steuersignals mit einem Signalpegel, vorzugsweise in Höhe der Bordspannung, aufweist und die Einheit zur Pulsweitenmodulation mit einem zur Steuereinrichtung gehörenden Wandler (14) zur Umwandlung des pulsweitenmodulierten Signals (13) in eine analoge Steuerspannung verbunden ist.

18. Fahrzeugrückblicksystem nach einem der vorhergehenden Ansprüche, **dadurch gekennzeichnet, daß** die Steuereinrichtung einen Analog-Digital-Wandler (15) zur Digitalisierung eines Steuersignals aufweist und der Analog-Digital-Wandler über einen Datenbus mit einem Ditigal-Analog-Wandler zur Umwandlung des Digitalsignals in eine analoge Steuerspannung verbunden ist.

19. Fahrzeugrückblicksystem nach Anspruch 18, **dadurch gekennzeichnet, daß** das Datenbus-Protokoll auf einem UART- oder CAN-System basiert.

20. Fahrzeugrückblicksystem nach einem der vorhergehenden Ansprüche, **dadurch gekennzeichnet, daß** der Heizwiderstand (3) in Reihe zu einer aus mindestens einem elektrochromen Spiegel (2) und einem Transistor bestehenden Parallelschaltung geschaltet ist.

21. Fahrzeugrückblicksystem nach einem der Ansprüche 1 bis 19, **dadurch gekennzeichnet, daß** der Heizwiderstand (3) in Serie zu einem elektrochromen Spiegel (2) und einem in Serie dazu stehenden Transistor (17) geschaltet ist.

22. Fahrzeugrückblicksystem nach einem der vorhergehenden Ansprüche, **dadurch gekennzeichnet, daß** die elektrischen Verbindungen innerhalb der Steuereinrichtung und/oder zwischen Steuereinrichtung und elektrochromen Spiegeln als Folienleiterplatten ausgeführt sind.

## Claims

1. Vehicle rear vision system (1) with at least one rearview mirror unit provided with an electrochromic mirror (2), with a control device as well as a vehicle power supply device, the control device being electrically connected for its power supply to the vehicle power supply device and to the electrochromic mirror in order to control the reflection properties of said mirror in dependence on a control voltage and to a sheet-type heating resistor,
**characterised in that**
the control device has the sheet-type heating resistor (3) as dissipating resistor to carry away the electrical dissipation loss resulting from the generation of the control voltage as heat.

2. Vehicle rear vision system according to claim 1, **characterised in that** the control voltage is less than 25% of the vehicle's voltage.

3. Vehicle rear vision system according to one of the preceding claims, **characterised in that** the rearview mirror unit is embodied as an interior mirror unit (4) or an exterior mirror unit (5).

4. Vehicle rear vision system according to claim 3, **characterised in that** both the interior (4) and/or exterior mirror unit (5) have electrochromic mirrors (2) which are respectively connected to the control device.

5. Vehicle rear vision system according to claim 3, **characterised in that** parts of the control device are accommodated in the housing (9) of the interior (4) or exterior mirror unit (5).

6. Vehicle rear vision system according to one of the preceding claims, **characterised in that** the heating resistor (3) is applied as a coating to a carrier material.

7. Vehicle rear vision system according to claim 6, **characterised in that** the carrier material is the non-reflective rear side (2a) of the mirror (2) of the rearview mirror unit, a flat electrical line or a foil.

8. Vehicle rear vision system according to claim. 6, **characterised in that** the coating is made of copper, silver or aluminium.

9. Vehicle rear vision system according to Claim 7, **characterised in that** the heating resistor (3) is disposed in meander shape on the carrier material (2).

10. Vehicle rear vision system according to claim 9, **characterised in that**, on the same carrier material as that on which the heating resistor (3) is disposed in meander shape, there is disposed a mirror glass heating system (6) is disposed belonging to the rearview mirror unit.

11. Rear vision system according to one of the preceding claims, **characterised in that** the heating resistor (3) is connected to the electrochromic mirror (2) either as part of the material of same or as a form-fit.

12. Vehicle rear vision system according to one of the preceding claims, **characterised in that** the mirror is disposed on a glass support plate (7) belonging to the rearview mirror unit, which plate is orientated towards the non-reflective rear side of the mirror, and the heating resistor (3) as well as further elements of the control device are disposed between the mirror and the glass support plate.

13. Vehicle rear vision system according to one of the preceding claims, **characterised in that** elements of the control device are arranged in a glass adjustment drive (8) belonging to the rearview mirror unit.

14. Vehicle rear vision system according to one of the preceding claims, **characterised in that** the control device contains an integrated circuit.

15. Vehicle rear vision system according to claim 14, **characterised in that** the integrated circuit is applied directly to a foil.

16. Vehicle rearview system according to one of the preceding claims, **characterised in that** the control device has at least one light sensor (10, 11) disposed preferably in the region of incident light of an electrochromic mirror, and which generates a control signal to generate a control voltage in dependence on the incident light flux.

17. Vehicle rear vision system according to one of the preceding claims, **characterised in that** the control device has a unit for the pulse-width modulation (12) of a control signal with a signal level, preferably at the level of the vehicle's voltage, and the unit for the pulse-width modulation is connected to a transformer (14), belonging to the control device, for converting the pulse-width modulated signal (13) into an analog control voltage.

18. Vehicle rear vision system according to one of the preceding claims, **characterised in that** the control device has an analog-digital converter (15) for the digitization of a control signal and the analog-digital converter is connected via a data bus to a digital-analog converter in order to convert the digital signal into an analog control voltage.

19. Vehicle rear vision system according to claim 18, **characterised in that** the data bus protocol is based on a UART or CAN system.

20. Vehicle rear vision system according to one of the preceding claims, **characterised in that** the heating resistor (3) is connected in series to a parallel connection consisting of at least one electrochromic mirror (2) and a transistor.

21. Vehicle rear vision system according to one of claims 1 - 19, **characterised in that** the heating resistor (3) is connected in series to an electrochromic mirror (2) and to a transistor (17) placed in series to same.

22. Vehicle rear vision system according to one of the preceding claims, **characterised in that** the electrical connections within the control device and/or between the control device and electrochromic mirrors are realised as foil printed circuits.

## Revendications

1. Système de rétroviseur de véhicule (1) comportant au moins une unité de rétroviseur (5) pourvue d'un miroir électrochrome (2), un dispositif de commande et un dispositif de bord d'alimentation en courant, le dispositif de commande (12, 20) étant relié par voie électrique pour son alimentation en courant au dispositif de bord d'alimentation en courant (23, 24), au miroir électrochrome pour commander ses propriétés de réflexion en fonction d'une tension de commande, et à une résistance de chauffe (3) de type plane,
**caractérisé en ce que** le dispositif de commande présente la résistance de chauffe de type plane (3) en tant que résistance ohmique pour éliminer en chaleur les pertes en puissance électrique découlant de la génération de la tension de commande.

2. Système de rétroviseur de véhicule selon la revendication 1, **caractérisé en ce que** la tension de commande est inférieure à 25 % de la tension de bord.

3. Système de rétroviseur de véhicule selon l'une des revendications précédentes, **caractérisé en ce que** l'unité de rétroviseur est conçue en tant qu'unité de rétroviseur intérieur (4) ou extérieur (5).

4. Système de rétroviseur de véhicule selon la revendication 3, **caractérisé en ce que** l'unité de rétroviseur intérieur (4) et/ou extérieur (5) présente(nt) respectivement des miroirs électrochromes (2) qui sont respectivement reliés au dispositif de commande.

5. Système de rétroviseur de véhicule selon la revendication 3, **caractérisé en ce que** des pièces du dispositif de commande sont logées dans le boîtier (9) de l'unité de rétroviseur intérieur (4) ou extérieur (5).

6. Système de rétroviseur de véhicule selon l'une des revendications précédentes, **caractérisé en ce que** la résistance de chauffe (3) est appliquée en tant que revêtement sur un matériau de support.

7. Système de rétroviseur de véhicule selon la revendication 6, **caractérisé en ce que** le matériau de support est la face arrière non réfléchissante (2a) du miroir (2) de l'unité de rétroviseur, une conduite électrique exécutée de façon plane ou une feuille.

8. Système de rétroviseur de véhicule selon la revendication 6, **caractérisé en ce que** le revêtement ést en cuivre, en argent ou en aluminium.

9. Système de rétroviseur de véhicule selon la revendication 7, **caractérisé en ce que** la résistance de chauffe (3) est disposée sur le matériau de support (2) en formant des méandres.

10. Système de rétroviseur de véhicule selon la revendication 9, **caractérisé en ce qu'**est disposé, sur le même matériau de support que celui sur lequel est disposée en formant des méandres la résistance de chauffe (3), un chauffage de verre de rétroviseur (6) appartenant à l'unité de rétroviseur.

11. Système de rétroviseur de véhicule selon l'une des revendications précédentes, **caractérisé en ce que** la résistance de chauffe (3) est reliée au miroir électrochrome par engagement de matériau ou de formes.

12. Système de rétroviseur de véhicule selon l'une des revendications précédentes, **caractérisé en ce que** le miroir est disposé sur une plaque de support de verre (7) appartenant à l'unité de rétroviseur et orientée vers la face non réfléchissante du miroir, et **en ce que** la résistance de chauffe (3) et d'autres éléments du dispositif de commande sont disposés entre le miroir et la plaque de support de verre.

13. Système de rétroviseur de véhicule selon l'une des revendications précédentes, **caractérisé en ce que** des éléments du dispositif de commande sont disposés dans un entraînement (8) de réglage de verre appartenant à l'unité de rétroviseur.

14. Système de rétroviseur de véhicule selon l'une des revendications précédentes, **caractérisé en ce que** le dispositif de commande contient un circuit intégré.

15. Système de rétroviseur de véhicule selon la revendication 14, **caractérisé en ce que** le circuit intégré est directement appliqué sur une feuille.

16. Système de rétroviseur de véhicule selon l'une des revendications précédentes, **caractérisé en ce que** le dispositif de commande présente au moins un capteur optique (10, 11) disposé de préférence dans la zone d'incidence de lumière d'un miroir électrochrome, lequel génère, en fonction du flux lumineux incident, un signal de commande permettant de générer une tension de commande.

17. Système de rétroviseur de véhicule selon l'une des revendications précédentes, **caractérisé en ce que** le dispositif de commande présente une unité de modulation de largeur d'impulsions (12) d'un signal de commande avec un niveau de signal de préférence au niveau de la tension de bord, et **en ce que** l'unité de modulation de largeur d'impulsions est reliée à un convertisseur (14) appartenant au dispositif de commande pour transformer le signal modulé en largeur (13) en une tension de commande analogique.

18. Système de rétroviseur de véhicule selon l'une des revendications précédentes, **caractérisé en ce que** le dispositif de commande présente un convertisseur analogique-numérique (15) permettant de numériser un signal de commande, et **en ce que** le convertisseur analogique-numérique est relié via un bus de données à un convertisseur numérique-analogique permettant de transformer le signal numérique en une tension de commande analogique.

19. Système de rétroviseur de véhicule selon la revendication 18, **caractérisé en ce que** le protocole du bus de données repose sur un système UART ou CAN.

20. Système de rétroviseur de véhicule selon l'une des revendications précédentes, **caractérisé en ce que** la résistance de chauffe (3) est montée en série par rapport à un montage en parallèle composé d'au moins un miroir électrochrome (2) et d'un transistor.

21. Système de rétroviseur de véhicule selon l'une des revendications 1 à 19, **caractérisé en ce que** la résistance de chauffe (3) est montée en série par rapport à un miroir électrochrome (2) et un transistor (17) montés en série.

22. Système de rétroviseur de véhicule selon l'une des revendications précédentes, **caractérisé en ce que** les connexions électriques sont exécutées au sein du dispositif de commande et/ou entre le dispositif de commande et le miroir électrochrome en tant que carte imprimée en feuille.
